# EUROPÄISCHE PATENTSCHRIFT

(11) **EP 3 707 567 B1**
(45) Veröffentlichungstag und Bekanntmachung des Hinweises auf die Patenterteilung: **02.04.2025**
(21) Anmeldenummer: 18806989.2
(22) Anmeldetag: 08.11.2018
(51) Int. Cl.: G05B 19/042, H04L 67/025, H04L 67/12, H04L 67/00

(54) **VERFAHREN ZUM BETRIEB EINES LANDWIRTSCHAFTLICHEN ARBEITSGERÄTES UND ANORDNUNG UMFASSEND EIN LANDWIRTSCHAFTLICHES ARBEITSGERÄT**
METHOD FOR OPERATING AN AGRICULTURAL IMPLEMENT AND ARRANGEMENT COMPRISING AN AGRICULTURAL IMPLEMENT
PROCÉDÉ DE FONCTIONNEMENT D'UN ENGIN DE TRAVAIL AGRICOLE ET DISPOSITIF COMPRENANT UN ENGIN DE TRAVAIL AGRICOLE

(30) Priorität: 08.11.2017 DE 102017126122
(43) Veröffentlichungstag der Anmeldung: 16.09.2020
(73) Patentinhaber: Grimme Landmaschinenfabrik GmbH & Co. KG, 49401 Damme (DE)
(72) Erfinder: VAN ZADELHOFF, Gustaaf Garrit Johan, Damme 49401 (DE); NAPIERALA, Torsten, Salzkotten 33154 (DE); GROTHAUS, Christoph, Melle 49326 (DE)
(74) Vertreter: Wischmeyer, André
(86) Internationale Anmeldenummer: PCT/EP2018/080673
(87) Internationale Veröffentlichungsnummer: WO 2019/092139

(56) Entgegenhaltungen:
- EP-A2- 2 798 930
- DE-A1- 102015 112 613
- US-A1- 2007 140 269
- US-A1- 2014 325 419
- US-A1- 2015 052 447
- US-A1- 2016 246 296
- MARVIN L STONE ET AL: "ISO 11783: AN ELECTRONIC COMMUNICATIONS PROTOCOL FOR AGRICULTURAL EQUIPMENT", 7 February 1999 (1999-02-07), pages 3 - 17, XP002541127, Retrieved from the Internet <URL:http://asae.frymulti.com/data/pdf/6/ddp2002/lecture23.pdf> [retrieved on 19990210]

## Beschreibung

Die vorliegende Erfindung betrifft ein Verfahren zum Betrieb eines landwirtschaftlichen Arbeitsgeräts, welches insbesondere als von einem Schlepper gezogenes oder selbstfahrendes Arbeitsgerät ausgebildet ist, wobei über wenigstens einen auf dem Arbeitsgerät angeordneten Jobrechner ein oder mehrere für den Betrieb relevante Maschinenparameter verwaltet werden und vorzugsweise mittels einer Schnittstelle auf einem der zumindest zwei insbesondere drahtlos und/oder kabelgebunden angebundene Universal-Terminals abgebildet werden. Darüber hinaus betrifft die Erfindung eine Anordnung umfassend ein landwirtschaftliches Arbeitsgerät sowie zumindest zwei Universal-Terminals, die über eine Schnittstelle des Jobrechners mit diesem verbindbar sind.

Aus der US 2014/0350752 A1 ist ein Betrieb eines landwirtschaftlichen Arbeitsgeräts bekannt. Einzelne Maschinenparameter, die sich aus den Funktionen der Maschine (nachfolgend "Maschinenfunktionen") ergeben, werden einzelnen Universal-Terminals, auch als virtuelle Terminals (VTs) bezeichnet, zugeordnet, um dort im Betrieb angezeigt zu werden. Während eine erste Untergruppe von Maschinenparametern einem ersten Universal-Terminal zugeordnet wird, wird eine weitere Untergruppe anderer Maschinenparameter auf einem weiteren Terminal zugeordnet. Entsprechend zeigen die Universal-Terminals jeweils unterschiedlichen Parameter und unterschiedliche, bedienbare Maschinenfunktionen werden mittels der jeweiligen Maschinenparameter jeweils von unterschiedlichen Universal-Terminals aus bedient. Die Verteilung der Bedienung der Funktionen eines Arbeitsgerätes auf eine Vielzahl von Monitoren bzw. Anzeigeeinheiten in Form von Universal-Terminals trägt den zunehmend komplexer werdenden Maschinenfunktionen Rechnung, die oftmals nicht mehr übersichtlich auf einem Universal-Terminal dargestellt werden können. Die Universal-Terminals, die beispielsweise bei einem gezogenen Arbeitsgerät rechts vom Fahrer angeordnet sind, können gleichzeitig eine Vielzahl von Informationen darstellen, die die Bedienung der Maschine in vielerlei Hinsicht erlauben. Allerdings kann es aufgrund der Vielzahl der ansteuerbaren Terminals und der Vielzahl der dann dargestellten unterschiedlichen Funktionen für das Bedienpersonal unübersichtlich werden.

Aus der US 2017/0131959 A1 ist weiterhin ein herkömmliches System mit einem auf einem Schlepper angeordneten Jobrechner, einem Haupt-Display sowie einem oder mehreren Hilfs-Displays, wobei vom Haupt-Display aus den Hilfs-Displays auf diesen darzustellende Inhalte oder Funktionen zugewiesen werden. Ohne das Haupt-Display ist das System nicht verwendbar.

Die US 2015/052447 A1 betrifft ein Fahrzeug mit einem Display, dessen Bild von einem Rechner berechnet wird und mittels eines Daten-BUS auf das Display übertragen wird. Gemäß der US 2015/052447 A1 existiert außerhalb des Fahrzeugs ein weiteres, mittels eines Netzwerkes mit dem Fahrzeug verbundenes Display.

Aus der DE 10 2015 112 613 A1 ist ein System zur Fernwartung einer mobilen Maschine bekannt. Diese umfasst eine erste Anzeigeeinheit und eine Kommunikationseinrichtung, die zur Kommunikation mit einer lokal entfernten, zweiten Kommunikationseinrichtung über ein Datennetz ausgebildet ist.

US 2007/0140269 A1 offenbart ein Kommunikationssystem für eine Planierraupe.

In dem Konferenzbeitrag von MARVIN L STONE ET AL zur AGRICULTURAL EQUIPMENT TECHNOLOGY CONFERENCE 1999 "ISO 11783: AN ELECTRONIC COMMUNICATIONS PROTOCOL FOR AGRICULTURAL EQUIPMENT" werden Grundzüge eines Kommunikationsprotokolls beschrieben.

Die US2016/246296 A1 bezieht sich auf ein Materialflussüberwachungs- und -ausgleichssystem, insbesondere auf ein System zum Messen und Ausgleichen des Flusses von Saatgut und/oder anderem Material durch ein Air-Seeding-System unter Verwendung von akustischen Sensoren und einstellbaren Durchflussbegrenzern. Für die Überwachung und Steuerung des System kann eine Mehrzahl unterschiedlich berechtigter Terminals verwendet werden.

Es ist Aufgabe der vorliegenden Erfindung, die Bedienung eines landwirtschaftlichen Arbeitsgerätes über Universal-Terminals zu vereinfachen.

Die Aufgabe wird gelöst durch ein Verfahren gemäß Anspruch 1 sowie durch eine Anordnung gemäß Anspruch 12. Erfindungsgemäße Ausgestaltungen sind weiterhin den auf diese Ansprüche rückbezogenen Unteransprüchen sowie der nachfolgenden Beschreibung zu entnehmen.

Erfindungsgemäß ist vorgesehen, dass nach einer etwaigen anfänglichen, d.h. je nach Ausführungsbeispiel auch nicht vorhandenen, Konfigurationsphase im Betrieb der zumindest eine Maschinenparameter gleichzeitig auf dem zweiten Universal-Terminal abgebildet wird. Die Möglichkeit, gleichzeitig Informationen zu einem Maschinenparameter auf zumindest zwei Universal-Terminals gleichzeitig abzubilden, erleichtert dem Bedienpersonal die Maschinenbedienung insbesondere dann, wenn die beiden Universal-Terminals nicht am selben Ort, sondern entfernt voneinander angeordnet sind. Zumindest in Teilen identisch aufgebaute Bereiche eines Bildschirms bzw. Displays des Universal-Terminals mit optisch identischem Aufbau erleichtern die schnelle Erfassung relevanter Maschinenparameter unabhängig vom verwendeten Universal-Terminal. Weitere Bereiche der Bildschirme können jeweils anders gestaltet sein und jeweils unterschiedliche Maschinenparameter darstellen. Hierbei kann es sich um eine Anordnung an voneinander entfernten Positionen innerhalb einer Fahrerkabine, z.B. links und rechts vom Fahrersitz, oder um eine Positionierung innerhalb des Schleppers und auf dem Arbeitsgerät selbst, z.B. an einem Verlesetisch, handeln.

Der Jobrechner, auch als Electronic Control Unit (ECU) bezeichnet, kann maschinenseitig in der Regel eine Vielzahl von Maschinenparametern einzelner Maschinenfunktionen aufnehmen, verwalten und gegebenenfalls zwecks Steuerung der Maschinenfunktionen an zugehörige Aktoren passend übermitteln. Da nunmehr lediglich nur noch von einer Hardware-Einheit Interrupts in das vorzugsweise als Bussystem ausgebildete Netzwerk des Arbeitsgeräts übermittelt werden, reduziert sich die Anzahl der Interrupts. Dadurch kann das System effizienter betrieben werden, was insbesondere bei einer großen Anzahl von Maschinenfunktionen und deren verteilte Darstellung auf einer Vielzahl von Universal-Terminals eine verbesserte Performance im Vergleich zu Maschinenfunktionen, die jeweils über eigene Jobrechner auf einzelne Universal-Terminals desselben Netzes abgebildet werden, bewirkt.

Das Netzwerk des Arbeitsgeräts umfasst zumindest den Jobrechner sowie die Verbindung zu den Universal-Terminals und diese zueinander gleichberechtigten Terminals selbst. Die Universal-Terminals sind erfindungsgemäß dergestalt gleichberechtigt, dass sie insbesondere auch hinsichtlich ihrer Bus-Adressen beliebig gegeneinander austauschbar sind und/oder bei Entfernen eines Universal-Terminals die Verwendung des oder der weiteren Universal-Terminals weiterhin möglich ist. Die Konfiguration der Universal-Terminals kann erfindungsgemäß von jedem Universal-Terminal aus vorgenommen werden und die Konfiguration etwaiger Display-Flächen eines Universal-Terminals und/oder insbesondere die Interpretation etwaiger Eingaben auf einer jeweiligen Display-Fläche erfolgt insoweit unabhängig vom jeweiligen Universal-Terminal auf dem Job-Rechner.

Die zugehörige Schnittstelle des Jobrechners, die als ISOBUS-Schnittstelle ausgebildet ist, gestattet die Anbindung des Jobrechners an die Universal-Terminals, wobei es sich hierbei um eine drahtlose und/oder kabelgebundene Anbindung handeln kann.

Die Abbildung der Maschinenparameter auf dem Universal-Terminal umfasst einerseits die reine Darstellung der Maschinenparameter auf dem Display des Universal-Terminals. Es kann sich jedoch andererseits auch um eine Anzeige von in darstellbare Größen be- oder verarbeitete Informationen als Maschinenparameter handeln. Eine gleichzeitige Darstellung ist eine Darstellung, bei der die jeweiligen Maschinenparameter auf nebeneinander angeordneten Universal-Terminals für das menschliche Auge ungeachtet etwaiger Bildwiederholfrequenzen gleichzeitig vorhanden sind. Die Displays sind vorzugsweise als Touch-Displays ausgebildet, so dass etwaige Eingabeoberflächen auf dem Display selbst realisiert sind.

Erfindungsgemäß ist das Netzwerk als ISOBUS-Netzwerk ausgebildet und damit gemäß dem ISOBUS-Standard ISO11783. Es versteht sich, dass der Jobrechner hierfür sowohl hardware- als auch softwareseitig entsprechend ausgestattet ist. Die notwendigen Mittel umfassen insbesondere eine Betriebs- bzw. Steuerungssoftware zur Be- und gegebenenfalls Verarbeitung der von den einzelnen Maschinenfunktionen erhaltenen Informationen in Form von Maschinenparametern. Diese Software kontrolliert zum Beispiel Sensorabfragen und enthält Regel-Algorithmen zur An- und Steuerung arbeitsgerätseitiger Aktoren. Des Weiteren ist ein Graphical User Interface (GUI) realisiert, welches zur Ansteuerung der Universal-Terminals ausgebildet ist. Weitere Mittel umfassen Eingänge und/oder Ausgänge für die Auswertung von Sensorik sowie für die Ansteuerung von Aktoren, einen oder mehrere Mikrocontroller, Speicher (in Form von RAM- bzw. ROM-Speicher), sowie eine oder mehrere Netzwerk-Schnittstellen (CAN, LIN, Ethernet, MOST und/oder FlexRay).

Die Erfindung zeichnet sich dadurch aus, dass dem Maschinenparameter insbesondere kurz nach dem Systemstart auf den zumindest zwei Universal-Terminals Eingabeoberflächen zugeordnet werden, über die der Maschinenparameter von beiden Universal-Terminals aus verändert werden kann. Somit kann nicht nur die Wiedergabe des Maschinenparameters und die Überwachung einer entsprechend zugehörigen Maschinenfunktion auf zwei verschiedenen Terminals gleichzeitig vorgenommen werden, vielmehr können bei aktiv steuerbaren Maschinenfunktionen bzw. bei entsprechend zu regelnden Maschinenparametern diese von beiden Terminals aus verändert werden. Die Bedienung identischer Maschinenfunktionen wird somit von mehreren Terminals aus ermöglicht. Dies ist insbesondere vorteilhaft für komplexe, gezogene landwirtschaftliche Arbeitsgeräte, beispielsweise Hackfruchternter, insbesondere Kartoffelernter, bei denen sowohl schlepperseitig als auch verlesetischseitig Universal-Terminals beabstandet voneinander angeordnet werden können und von denen identische Maschinenfunktionen einstellbar sind. So kann sowohl ein Schlepperfahrer wie auch Bedienpersonal auf dem Arbeitsgerät selbst identische Maschinenfunktionen bedienen.

Vorteilhafterweise erfolgt eine Konfiguration der Eingabeoberflächen am Universal-Terminal mittels eines auf dem Jobrechner ausgeführten Konfigurationsassistenten, der bei einer Erkennung eines unbekannten Universal-Terminals und insbesondere automatisch gestartet wird oder von einem Anwender gestartet werden kann.

Der Konfigurationsassistent ist ein Computerprogramm bzw. ein Teil eines auf dem Jobrechner ausgeführten Programms bzw. implementierten Softwaresystems und kann insbesondere auch nachträglich aufgerufen werden, nämlich dann, wenn die Bedienoberflächen der Universal-Terminals geändert werden sollen. So können beispielsweise mehrere Bediener verschiedener landwirtschaftlicher Arbeitsgeräte ihren jeweils über eine **UID** (Unique Identifier) gekennzeichneten Universal-Terminal mitnehmen, um in Abhängigkeit von dem landwirtschaftlichen Arbeitsgerät und der **UID** des Terminals eine bestimmte Konfiguration der Benutzeroberfläche des als Mensch-Maschine-Interface wirkenden Universal-Terminals aufzurufen. Entsprechend ist es besonders vorteilhaft, wenn die Konfiguration der Universal-Terminals auf dem Jobrechner als Profil gespeichert wird, sodass eine Konfigurationsmöglichkeit oder ein passendes Profil automatisch nach Erkennen der am Jobrechner angeschlossenen bzw. mit diesem verbundenen Universal-Terminals gestartet wird. Die Konfiguration der Universal-Terminals erfolgt somit auf Seiten des Jobrechners, der jeweilige Universal-Terminals identifizieren kann und den Konfigurationsassistenten auf einem oder mehreren der erfindungsgemäß insbesondere zumindest anfänglich gleichberechtigten Universal-Terminals darstellt.

Insbesondere für Service- oder anderes, privilegiertes Bedienpersonal kann der Konfigurationsassistent verschiedene und von einem einfachen Benutzer nicht erreichbare Ebenen aufweisen, die zum Teil über eine Log-in-Maske mit Passwort-Eingabe gesichert sind. Hierdurch können spezielle Maschinenfunktionen, die leichter zu Fehlbedienung und kritischen Arbeitsgerätezuständen führen können, gesichert werden.

Vorzugsweise können auf dem Jobrechner eine Mehrzahl von Konfigurationen in Form von Profilen gespeichert werden, von denen eine in Abhängigkeit der mit dem Jobrechner verbundenen Universal-Terminals nach einem Systemstart oder nach einem Austausch eines Universal-Terminals geladen wird. Ein solcher Austausch kann auch während des laufenden Betriebs der Software und des Arbeitsgeräts erfolgen. Hierfür werden jobrechnerseitig in Abständen, insbesondere in regelmäßigen Abständen die im Netzwerk vorhandenen Unique Identifiers der Universal-Terminals überprüft. Bei Erkennung einer unbekannten UID kann dann der Konfigurationsassistent gestartet werden. Bei mehreren möglichen Konfigurationen von bekannten Universal-Terminals kann dem Bediener bei einem Neustart des Systems oder bei einer Neukombination bekannter Geräte entweder eine Auswahlmöglichkeit auf der Bedienoberfläche der beiden Universal-Terminals angeboten werden oder es wird nach einem Neustart die zuletzt aktive Konfiguration ausgewählt. So können beispielsweise bei Erkennen einer Anzahl von mehr als zwei Universal-Terminals je nach Konfiguration nur eine Untergruppe von den insgesamt vorhandenen Universal-Terminals betrieben werden. Zu Absicherungszwecken kann zum Aufrufen einer Konfiguration eine Passworteingabe durchlaufen werden, sodass die einmal vorgenommene Konfiguration der zumindest zwei Universal-Terminals nicht leicht geändert werden kann. Durch das erfindungsgemäße Verfahren ist somit auch eine einfache schlepperabhängige Ausbildung der Maschinenbedienung möglich, wenn auf den jeweiligen Schleppern unterschiedliche Universal-Terminals vorhanden sind.

Vorteilhafterweise wird nach der Beeinflussung eines Maschinenparameters und somit einer Maschinenfunktion über einen der Universal-Terminals die Abbildung des Maschinenparameters auf dem oder den weiteren Universal-Terminals angepasst. Entsprechend ist die auf dem Jobrechner vorhandene Software in der Lage, die durch eine Eingabe bewirkte Änderung unmittelbar auch auf anderen Universal-Terminals wiederzugeben, was für die Bedienung an verschiedenen Standorten auf Schlepper und Arbeitsgerät vorteilhaft ist.

Bei einer erfindungsgemäßen Weiterbildung, bei der zumindest ein Maschinenparameter und damit eine Maschinenfunktion des Arbeitsgerätes eingestellt und/oder gesteuert wird, wird zur Vermeidung gleichzeitiger Änderungen eines Maschinenparameters von unterschiedlichen Universal-Terminals aus bei Beginn einer Eingabe auf einem ersten der Universal-Terminals eine Eingabe auf dem zweiten Universal-Terminal softwaremäßig blockiert. Diese Blockade erfolgt insbesondere softwaretechnisch dahingehend, dass Eingaben an dem dann blockierten Universal-Terminal entweder nicht angenommen oder nicht beachtet werden. Entsprechend kann ein grafischer Hinweis gegeben werden, dass die Eingabe aufgrund einer weiteren Eingabe an einem anderen Universal-Terminal nicht möglich ist.

Ergänzend oder alternativ ist es von Vorteil, wenn bei Detektion eines kritischen Wertes eines Maschinenparameters auf zumindest den beiden Universal-Terminals eine Alarmmeldung angezeigt wird. Dies ist insbesondere für Störungsmeldungen zu wichtigen Maschinenfunktionen vorteilhaft. So kann bei kritischen Betriebszuständen egal von welchem Universal-Terminal aus eine Reaktion, wie beispielsweise das Beeinflussen des zugehörigen Maschinenparameters erfolgen.

Weiterhin ist es von Vorteil, wenn der Jobrechner gemäß einer weiteren vorteilhaften Ausgestaltung mittels einer einzigen vorzugsweise als ISOBUS-Adresse ausgebildeten Adresse mit den Universal-Terminals kommuniziert, was die Anzahl der Interrupts verringert. Alternativ kann bei der Verwendung eines einzigen Jobrechners auf diesem Jobrechner eine Mehrzahl von insbesondere als ISOBUS-Adressen ausgebildeten Adressen in Form von Working Sets oder virtuellen Clients realisiert werden, so dass die einzelnen Universal-Terminals aus dem Job-Rechner heraus mit unterschiedlichen Adressen angesteuert werden. Vorzugsweise entspricht die Anzahl insbesondere als ISOBUS-Adressen ausgebildete Adressen der Anzahl der Universal-Terminals.

Gemäß einer weiteren erfindungsgemäßen Ausbildung der Erfindung wird der erste Universal-Terminal von dem in demselben Gehäuse befindlichen Jobrechner angesteuert und zu dem zweiten insbesondere kabel- und/oder drahtlos angebundenen Universal-Terminal (8) busangebunden kommuniziert. Eine busangebundene Kommunikation ist eine Kommunikation mittels eines Bus-Systems, z.B. mittels ISOBUS. Eine solche Anordnung kann für erfindungsgemäße Erntemaschinen von Vorteil sein, insbesondere wenn in demselben Gehäuse keine Busanbindung benötigt wird, sondern ein Jobrechner direkt einen Universal-Terminal ansteuern kann, beispielsweise durch eine platinenseitige Verbindung. Diese erleichtert dann die Kommunikation im weiteren Netzwerk, da nicht notwendigerweise Busadressen verwendet werden müssen. Allerdings kann auch bei einem in demselben Gehäuse angeordneten Universal-Terminal eine Busanbindung zu einem in demselben Gehäuse angeordneten Jobrechner vorhanden sein, was dann noch zur Einsparung im Bereich Gehäuse führt.

Die eingangs gestellte Aufgabe wird ebenfalls durch eine Anordnung umfassend ein landwirtschaftliches Arbeitsgerät gelöst, wobei das Arbeitsgerät insbesondere als von einem Schlepper gezogenes oder selbstfahrendes Arbeitsgerät ausgebildet ist, wobei das Arbeitsgerät einen auf dem Arbeitsgerät angeordneten Jobrechner umfasst. Der Jobrechner ist dann auf dem Arbeitsgerät angeordnet, wenn er auf oder in dem Arbeitsgerät angeordnet ist und somit insbesondere physikalisch mit dem Arbeitsgerät verbunden ist. Weiterhin umfasst eine solche Anordnung zumindest zwei über eine Schnittstelle des Jobrechners anzubindene, gleichberechtigte Universal-Terminals. Diese können wie vorbeschrieben drahtlos oder kabelgebunden verbunden werden oder sein. Das Netzwerk des Arbeitsgeräts ist als ISOBUS-Netzwerk ausgebildet und weist zumindest den Jobrechner, die Verbindung zu den Universal-Terminals und die Universal-Terminals auf. Eine erfindungsgemäße Anordnung zeichnet sich durch eine Ausbildung zur Durchführung eines vor- bzw. nachbeschriebenen erfindungsgemäßen Verfahrens aus. Eine solche Ausbildung ist dann gegeben, wenn Mittel vorhanden sind, die geeignet sind, die Schritte eines erfindungsgemäßen Verfahrens durchzuführen. Eine erfindungsgemäße Anordnung umfasst somit sowohl hardwareseitige Mittel wie auch die softwareseitige Mittel, die auf der Hardware realisiert sind.

Weiterhin ist in einem Ausführungsbeispiel erfindungsgemäß vorgesehen sowohl den Jobrechner als auch die beiden Universal-Terminals mit jeweils eigenen Gehäusen zu versehen. Insofern ist man frei in der Anordnung der Komponenten, die über das erfindungsgemäße Verfahren angesteuert werden. Es kann in einer auf eine kompaktere Bauweise abzielenden erfindungsgemäßen Ausgestaltung der Anordnung ebenfalls von Vorteil sein, den Jobrechner und den ersten Universal-Terminal in einem gemeinsamen Gehäuse anzuordnen, wobei der zweite Universal-Terminal davon entfernt und insbesondere in einem eigenen Gehäuse angeordnet ist.

Weitere Vorteile und Einzelheiten der Erfindung sind der nachfolgenden Figurenbeschreibung zu entnehmen. Schematisch dargestellt zeigt:
- Fig. 1:: eine Prinzipdarstellung einer erfindungsgemäßen Anordnung,
- Fig. 2:: einen Ablauf eines erfindungsgemäßen Verfahrens,
- Fig. 3:: Ausführungsbeispiele einer erfindungsgemäßen Anordnung,
- Fig. 4:: einen Teil einer erfindungsgemäßen Anordnung,
- Fig. 5:: einen weiteren Teil einer erfindungsgemäßen Anordnung.
- Fig. 6: einen Teil einer weiteren erfindungsgemäßen Anordnung.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

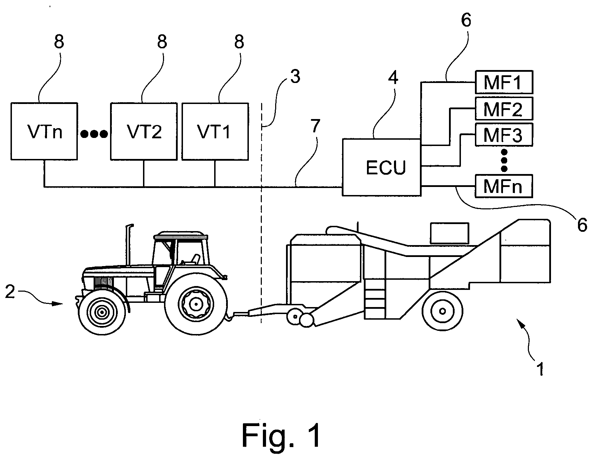

Eine erfindungsgemäße Anordnung umfasst ein landwirtschaftliches Arbeitsgerät, welches vorliegend als von einem Schlepper 2 gezogener Kartoffelernter ausgebildet ist. Oberhalb von Schlepper 2 und Arbeitsgerät 1 sind in der Fig. 1 schematisch einzelne Teile der Anordnung dargestellt. Eine gestrichelte Linie 3 deutet die Zuordnung einzelner Teile zu dem Arbeitsgerät 1 und dem Schlepper 2 an.

Ein Jobrechner 4 ist auf dem Kartoffelernter angeordnet. Dieser Jobrechner 4 verwaltet Maschinenparameter, die zur Steuerung oder Kontrolle einer Mehrzahl von Maschinenfunktionen MF1 bis MFn verwendet werden. Eine Maschinenfunktion ist beispielsweise die Einstellbarkeit einer Hydraulikpumpe oder die hierdurch bewirkte Fördergeschwindigkeit eines Förderbandes. Eine Maschinenfunktion kann z.B. auch in der Überwachung von Winkellagen bestimmter Maschinenbauteile durch Sensoren, in Aktoren zur Betätigung von Ventilen oder anderen funktionalen Teilen eines Kartoffelernters realisiert sein. Die Sensoren, Stellmittel etc. sind über Datenleitungen 6 mit zugehörigen Ein- und Ausgängen am Jobrechner 4 angebunden.

Über eine in dem Jobrechner 4 integrierte Schnittstelle sind auf dem Schlepper 2 vorhandene Universal-Terminals 8, zu deren Unterscheidung mit VT1 bis VTn bezeichnet, angebunden. Die Universal-Terminals 8 besitzen jeweils eine eigene vorliegend als ISOBUS-Adresse und sind mit einer zur Anbindung an den Jobrechner 4 vorgesehenen Datenleitung 7 verbunden. Diese ist als ISOBUS-Datenleitung 7 ausgebildet und konnektiert mit einer auf dem Jobrechner 4 vorhandenen Schnittstelle.

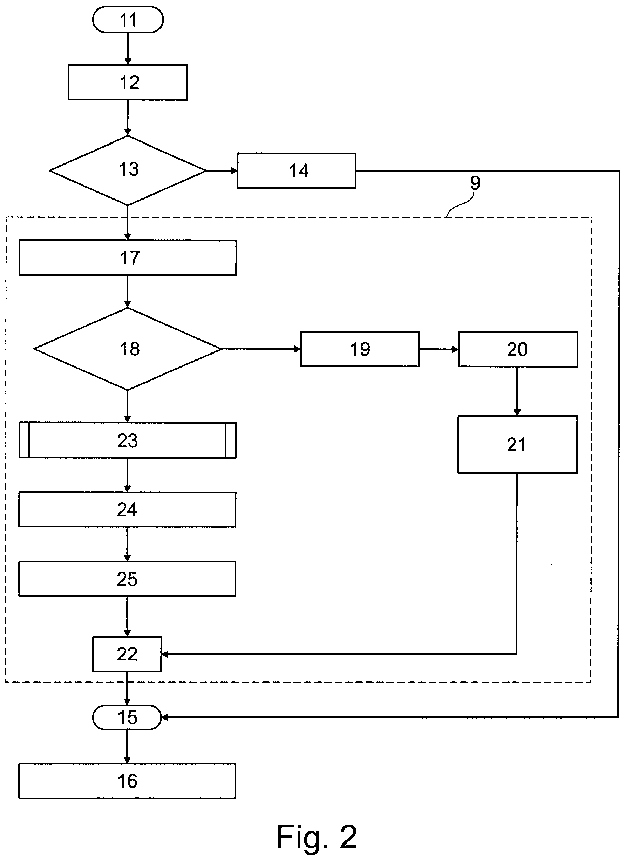

Ein erfindungsgemäßer Verfahrensablauf ist abschnittsweise in der Fig. 2 dargestellt. Wesentlicher Teil der Darstellung ist eine allgemein mit 9 bezifferte Konfigurationsphase, die die in dem gestrichelten Block vorhanden Schritte umfasst. Beginnend bei einem Neustart 11 des Systems werden außerhalb der für unbekannte Universal-Terminals verwendeten Konfigurationsphase 9 zunächst im Schritt 12 die verfügbaren Universal-Terminals von einem Konfigurationsassistenten detektiert. Dieser Konfigurationsassistent ist nicht nur zu Beginn des Systemstarts aktiv. Vielmehr wird von diesem auch ein während des Betriebs auftretendes Ab- bzw. Anstecken und Verbinden eines Universal-Terminals 8 mit dem Jobrechner 4 detektiert.

Im Rahmen der Überprüfung des Konfigurationsassistenten wird im Schritt 13 überprüft, ob die im Netzwerk vorhandenen und insbesondere als ISOBUS-Adressen ausgebildeten Adressen bzw. -Bezeichnungen der Universal-Terminals bereits bekannt, d.h. Gegenstand einer in einem Speicher abgelegten Konfiguration sind. Falls alle angeschlossenen Terminals bereits bekannt sind, wird im Schritt 14 das Profil mit der zuletzt verwendeten Konfiguration der Universal-Terminals 8 geladen und der Konfigurationsassistent anschließend im Schritt 15 beendet. Dann erfolgt im Schritt 16 die Darstellung der Maschinenparameter auf den Universal-Terminals 8, wobei zumindest ein Maschinenparameter gleichzeitig auf zwei Universal-Terminals 8 abgebildet wird.

Sofern zumindest eine der Universal-Terminal-Adressen noch unbekannt ist, d. h. nicht Gegenstand eines bereits abgespeicherten Profils sind, wird vorzugsweise auf allen Universal-Terminals eine grafische Nutzeroberfläche des Konfigurationsassistenten angezeigt (Schritt 17). Anschließend wird im Schritt 18 dem Benutzer eine Option für eine Einterminal-Strategie oder eine Mehrterminal-Strategie angeboten. Bei Auswahl der Einterminal-Strategie wird im Schritt 19 zunächst dasjenige Universal-Terminal ausgewählt, auf dem die Maschinenparameter angezeigt werden sollen. Daraufhin wird im Schritt 20 nur noch dieses Terminal angesteuert. Weiterhin wird im Schritt 21 die Oberfläche des Universal-Terminals konfiguriert. Im Schritt 22 wird diese Konfiguration als neuerstelltes Profil abgespeichert, wobei im Profil sowohl der benutzte Universal-Terminal als auch die unbenutzten Universal-Terminals hinterlegt sind. Dieser Schritt 22 erfolgt auch bei Auswahl einer Mehrterminal-Strategie. Bei dieser wählt der Anwender zunächst diejenigen Universal-Terminals aus, die er verwenden möchte (Schritt 23). Anschließend werden nur noch die Universal-Terminals, die für die Mehrterminal-Strategie ausgewählt wurden, verwendet (Schritt 24). Hierbei kann es sich auch um eine Untergruppe aller verfügbaren Terminals handeln.

Im Schritt 25 wird die Konfiguration der Universal-Terminals vorgenommen und die Oberfläche der Universal-Terminals für die darzustellenden Maschinenparameter eingerichtet, wobei zumindest ein Maschinenparameter auf zwei Terminals dargestellt wird. Basierend auf dieser Konfiguration wird anschließend ein Profil erstellt, wobei auch nun wieder diejenigen Universal-Terminals in das Profil mit eingebunden werden, die nicht verwendet werden. Anschließend wird dieses Profil im Schritt 22 abgespeichert und der Konfigurationsassistent im Schritt 15 beendet, woraufhin der Regelbetrieb im Schritt 16 startet.

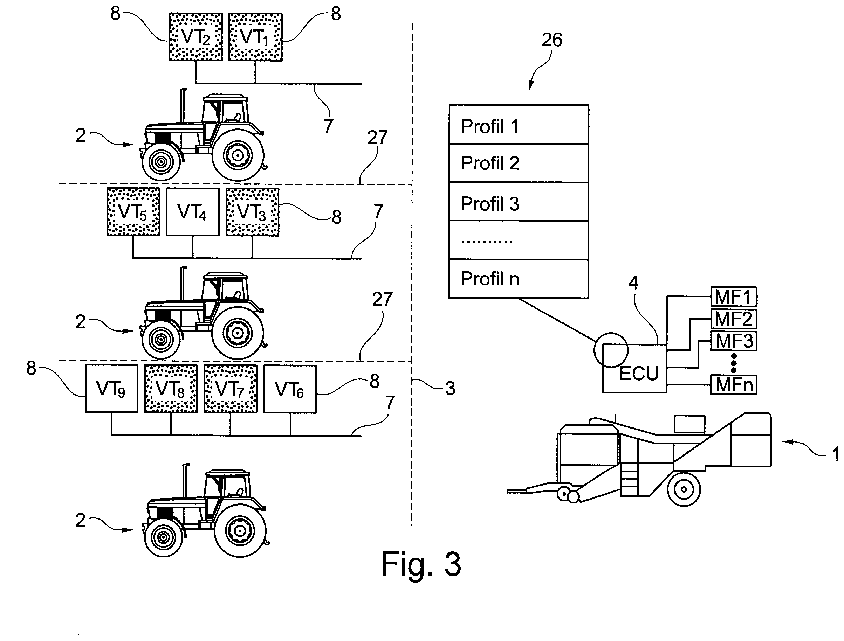

Die Verwendung mehrerer Konfigurationen über verschiedene Profile ist in der Fig. 3 veranschaulicht. So ist nach der Fig. 3 in einem Speicher 26 des Jobrechners 4 eine Mehrzahl von n Profilen (Profil 1 bis Profil n) abgelegt. Getrennt wiederum durch eine gestrichelte Linie 3 sind die unterschiedlichen Konfigurationen mit insgesamt neun verschiedenen Universal-Terminals 8, gekennzeichnet von VT1 bis VT9, auf insgesamt drei verschiedenen Schleppern 2 abgebildet. Diese Universal-Terminals sind somit bereits im System des Jobrechners 4 bekannt. Im Betrieb des Arbeitsgeräts 1 aktive Universal-Terminals 8 sind als Rechteck mit Punkten dargestellt, während nicht aktive Universal-Terminals 8 als nicht mit Punkten ausgefüllte Rechtecke dargestellt sind. Die drei übereinander befindlichen Profile sind ebenfalls über gestrichelte Linien 27 voneinander getrennt.

Das oberste Profil 1 umfasst eine erfindungsgemäße Anordnung mit zwei Universal-Terminals 8, die als VT1 und VT2 beide im Betrieb mit dem zugehörigen Schlepper 2 aktiv sind. Auf einem weiteren Schlepper vorhandene Universal-Terminals 8, die mit VT3, VT4 und VT5 bezeichnet sind, sind nur in Teilen aktiv. Terminal VT4 ist nicht aktiv. Auch bei dem Profil 3, welches die mit VT6, VT7, VT8 und VT9 bezeichneten Universal-Terminals 8 auf dem weiteren Schlepper 2 umfasst, sind mit VT6 und VT9 zwei nicht aktive Terminals vorhanden. Diese jeweiligen Profile werden bei einem Systemstart nach dem Anschließen des Arbeitsgeräts 1 an den jeweiligen Schlepper 2 automatisiert geladen. Durch das erfindungsgemäße Verfahren ist somit auch eine einfache schlepperabhängige Ausbildung der Maschinenbedienung möglich, wobei dem Maschinenparameter der jeweiligen Maschinenfunktion MF1 bis MFn auf beiden aktiven Universal-Terminals 8 jeweils Eingabeoberflächen zwecks Information über den Zustand oder zur Bedienung des Arbeitsgeräts 1 beim Systemstart zugeordnet werden.

In der Konfigurationsphase 9 werden diese Eingabeoberflächen für die unbekannten Universal-Terminal 8 definiert. Die jeweilige Konfiguration (Profile 1 bis n) werden auf den Jobrechner im Speicher 26 gespeichert.

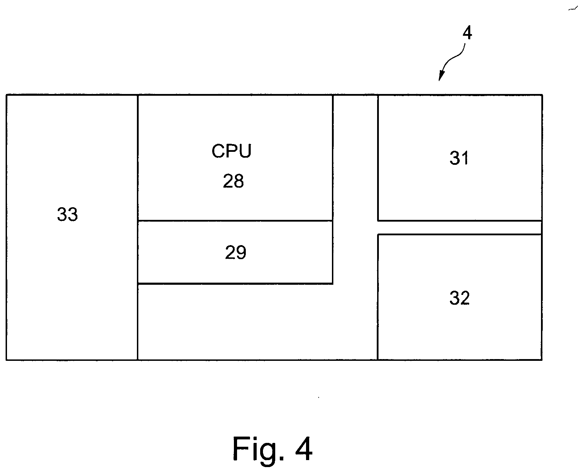

Gemäß Fig. 4 weist ein Jobrechner einer erfindungsgemäßen Anordnung eine CPU 28 auf, der vorzugsweise beschreibbare und lediglich lesbare Speichereinheiten 29 zugeordnet sind. Der Speicher 26 ist Teil dieser Speichereinheiten 29. Darüber hinaus weist der Jobrechner 4 eine Vielzahl von Eingängen 31 für Sensorik sowie eine Vielzahl von Ausgängen 32 für die Ansteuerung der Aktoren des Arbeitsgerätes 1 auf. Es versteht sich, dass die Anzahl der Ein- und Ausgänge 31, 32 je nach Arbeitsgerät variieren kann, und dass ein Arbeitsgerät so ausgebildet sein kann, dass der notwendige Jobrechner 4 nur Eingänge 31 aufweist.

Für die Anbindung an verschiedene Kommunikations- und Datenwege, sind eine oder mehrere Schnittstellen 33 vorhanden, die auf CAN-, LAN-, MOST-, oder anderen Datenverbindungsmitteln beruhen.

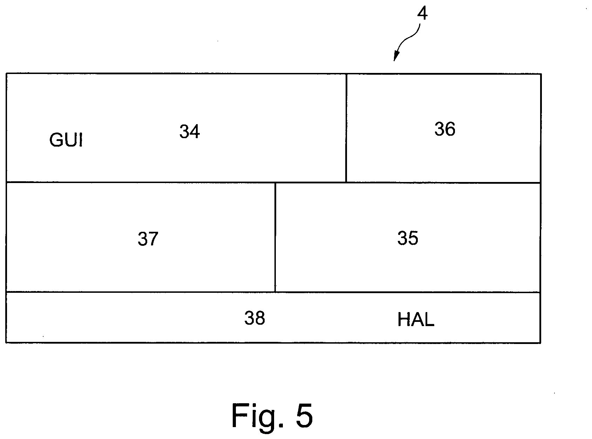

Dem hardwareseitigen Aufbau nach der Fig. 4 ist der softwareseitige Aufbau nach der Fig. 5 zugeordnet. Hiernach sind die hardwareseitigen Mittel durch die Verwendung entsprechender Software so ausgebildet, dass sie zur Durchführung des Verfahrens geeignet sind. Die Softwareeinrichtung des Jobrechners 4 umfasst ein Graphical User Interface (GUI) 34, das als Schnittstelle die Kommunikation mit den Universal-Terminals 8 gewährleistet. Zur Kommunikation im Netzwerk und mit den Universal-Terminals bedient sich das Graphical User Interface 34 insbesondere den Informationen, die von einem vorzugsweise als ISOBUS-Treibermodul ausgebildeten Treibermodul 35 zur Verfügung gestellt werden. Das Treibermodul stellt somit bevorzugterweise eine Funktionalität nach ISO11783 zur Verfügung.

Weiterhin gibt es einen als eigenständiges Modul oder als Unterroutine einer Software zum Betrieb des Jobrechners ausgebildeten Konfigurationsassistenten 36, der die Konfiguration der Universal-Terminals 8 realisiert. Die Ansteuerung und Abnahme der Maschinenparameter der jeweiligen Maschinenfunktionen des Arbeitsgeräts 1 wird über ein Hauptprogramm 37 bewirkt, welches dem Graphical User Interface die notwendigen Daten für die Darstellung auf den Universal-Terminals 8 zur Verfügung stellt bzw. von dieser Schnittstelle die zur Ansteuerung der Aktoren notwendigen Parameter erhält.

Dem Betrieb zugrunde liegt ein Hardware Abstraction Layer 38, der den Zugriff auf die Hardware ermöglicht.

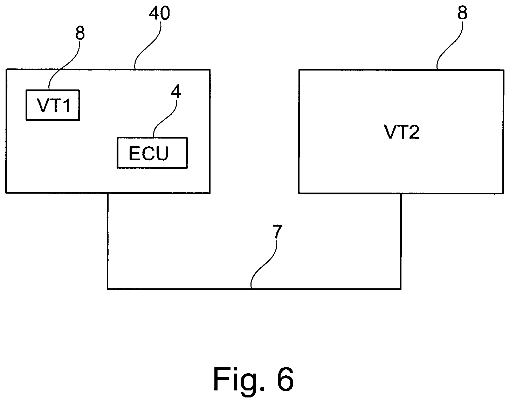

Gemäß dem Ausführungsbeispiel nach Fig. 6 kann der Jobrechner (ECU,4) mit einem Universal-Terminal 8, vorliegend als VT1 gekennzeichnet, in einem eigenen Gehäuse 40 angeordnet, während der zweite Universal-Terminal, vorliegend mit VT2 gekennzeichnet, über einen insbesondere als ISOBUS-Datenleitung 7 kabelgebunden angebunden und somit auch busangebunden ist. Beispielsweise kann das Gehäuse 40 mit dem Universal-Terminal 8 und dem Jobrechner 4 verlesetischseitig auf einem Hackfruchternter, insbesondere einem Kartoffelernter, angeordnet sein, während der mit VT2 gekennzeichnete Universal-Terminal 8 schlepperseitig, beispielsweise in einer Fahrerkabine, angeordnet ist.

## Patentansprüche

1. Verfahren zum Betrieb eines landwirtschaftlichen Arbeitsgeräts (1), welches insbesondere als von einem Schlepper (2) gezogenes oder selbstfahrendes Arbeitsgerät (1) ausgebildet ist, wobei über wenigstens einen auf dem Arbeitsgerät (1) angeordneten Jobrechner (4) ein oder mehrere für den Betrieb relevante Maschinenparameter verwaltet werden und mittels einer ISOBUS-Schnittstelle (34) auf einem ersten von zumindest zwei Universal-Terminals (8) abgebildet werden, wobei das Arbeitsgerät (1) ein Netzwerk umfasst, welches Netzwerk als ISOBUS-Netzwerk ausgebildet ist und zumindest den wenigstens einen Jobrechner (4), die Verbindung zu den zumindest zwei Universal-Terminals (8) und die zumindest zwei Universal-Terminals (8) aufweist, **dadurch gekennzeichnet, dass** nach einer etwaigen anfänglichen Konfigurationsphase (9) im Betrieb der zumindest eine Maschinenparameter gleichzeitig auf einem zweiten der zumindest zwei Universal-Terminals (8) abgebildet wird und die zumindest zwei Universal-Terminals dergestalt gleichberechtigt sind, dass sie auch hinsichtlich ihrer Bus-Adressen beliebig gegeneinander austauschbar sind, wobei dem zumindest einen Maschinenparameter auf den zumindest zwei Universal-Terminals (8) Eingabeoberflächen zugeordnet werden, über die der zumindest eine Maschinenparameter von beiden, also dem ersten und dem zweiten, Universal-Terminals (8) aus verändert werden kann.

2. Verfahren nach Anspruch 1, **dadurch gekennzeichnet, dass** eine Konfiguration der Eingabeoberflächen an den zumindest zwei Universal-Terminals (8) mittels eines auf dem wenigstens einen Jobrechner (4) ausgeführten Konfigurationsassistenten (36) erfolgt, der bei einer Erkennung eines unbekannten Universal-Terminals (8) gestartet wird oder von einem Anwender gestartet werden kann.

3. Verfahren nach Anspruch 2, **dadurch gekennzeichnet, dass** die Konfiguration der zumindest zwei Universal-Terminals (8) auf dem wenigstens einen Job-Rechner (4) gespeichert wird.

4. Verfahren nach Anspruch 3, **dadurch gekennzeichnet, dass** auf dem wenigstens einen Jobrechner (4) eine Mehrzahl von Konfigurationen gespeichert werden, von denen eine in Abhängigkeit der mit dem wenigstens einen Jobrechner (4) verbundenen Universal-Terminals (8) nach einem Systemstart oder nach einem Austausch eines Universal-Terminals (8) geladen wird.

5. Verfahren nach Anspruch 4, **dadurch gekennzeichnet, dass** zum Aufrufen einer Konfiguration eine Passworteingabe durchlaufen wird.

6. Verfahren nach einem der vorherigen Ansprüche, **dadurch gekennzeichnet, dass** nach der Beeinflussung eines Maschinenparameters über einen der beiden Universal-Terminals (8) die Abbildung des Maschinenparameters auf dem weiteren der beiden Universal-Terminals (8) angepasst wird.

7. Verfahren nach einem der vorherigen Ansprüche, **dadurch gekennzeichnet, dass** zur Vermeidung gleichzeitiger Änderungen eines Maschinenparameters an unterschiedlichen Universal-Terminals (8) bei Beginn einer Eingabe auf einem der beiden Universal-Terminals (8) eine Eingabe auf dem weiteren der beiden Universal-Terminals (8) blockiert wird.

8. Verfahren nach einem der vorherigen Ansprüche, **dadurch gekennzeichnet, dass** bei Detektion eines kritischen Wertes eines Maschinenparameters auf zumindest den beiden Universal-Terminals (8) eine Alarmmeldung angezeigt wird.

9. Verfahren nach einem der vorherigen Ansprüche, **dadurch gekennzeichnet, dass** der wenigstens eine Jobrechner (4) mittels einer einzigen vorzugsweise als ISOBUS-Adresse ausgebildeten Adresse mit den zumindest zwei Universal-Terminals (8) kommuniziert.

10. Verfahren nach einem der Ansprüche 1 bis 8, **dadurch gekennzeichnet, dass** der wenigstens eine Jobrechner (4) mittels mehr als einer vorzugsweise als ISOBUS-Adresse ausgebildeten Adresse mit den zumindest zwei Universal-Terminals (8) kommuniziert, wobei vorzugsweise die Anzahl der insbesondere als ISOBUS-Adressen ausgebildeten Adressen der Anzahl der zumindest zwei Universal-Terminals (8) entspricht.

11. Verfahren nach einem der vorherigen Ansprüche, **dadurch gekennzeichnet, dass** der erste Universal-Terminal (8) von dem wenigstens einen, in demselben Gehäuse befindlichen Jobrechner (4) angesteuert wird und zu dem zweiten Universal-Terminal (8) busangebunden kommuniziert wird.

12. Anordnung umfassend ein landwirtschaftliches Arbeitsgerät (1), welches insbesondere als von einem Schlepper (2) gezogenes oder selbstfahrendes Arbeitsgerät (1) ausgebildet ist, mit einem auf dem Arbeitsgerät (1) angeordneten Jobrechner (4) sowie umfassend zumindest zwei über eine ISOBUS-Schnittstelle des Jobrechners (4) angebundene Universal-Terminals, wobei das Arbeitsgerät (1) ein Netzwerk umfasst, welches Netzwerk als ISOBUS-Netzwerk ausgebildet ist und zumindest den Jobrechner (4), die Verbindung zu den zumindest zwei Universal-Terminals (8) und die zumindest zwei Universal-Terminals (8) aufweist. **dadurch gekennzeichnet, dass** die zumindest zwei Universal-Terminals dergestalt gleichberechtigt ausgebildet sind, dass sie auch hinsichtlich ihrer Bus-Adressen beliebig gegeneinander austauschbar sind, und dass die Anordnung zur Durchführung eines Verfahrens nach einem der vorherigen Ansprüche ausgebildet ist.

13. Anordnung nach Anspruch 12, **gekennzeichnet dadurch, dass** der Jobrechner (4) und die zumindest zwei Universal-Terminals (8) mit je eigenen Gehäusen versehen sind.

14. Anordnung nach Anspruch 12, **dadurch gekennzeichnet, dass** der Jobrechner (4) und einer der zumindest zwei Universal-Terminals (8) in einem gemeinsamen Gehäuse (40) angeordnet sind und ein zweiter der zumindest zwei Universal-Terminals (8) davon entfernt angeordnet ist.

## Claims

1. Method for operating an agricultural working device (1), which is designed in particular as a working device (1) which is towed or self-propelled by a tractor (2), wherein one or more machine parameters relevant for operation are managed via at least one job computer (4) arranged on the working device (1) and are displayed on a first of at least two universal terminals (8) by means of an ISOBUS interface (34), wherein the working device (1) comprises a network, which network is designed as an ISOBUS network, and at least the at least one job computer (4), the connection to the at least two universal terminals (8) and the at least two universal terminals (8), **characterized in that,** after an eventual initial configuration phase (9) during operation, the at least one machine parameter is displayed simultaneously on a second of the at least two universal terminals and the at least two universal terminals are equal in such a way that they are also interchangeable with one another with regard to their bus addresses, wherein input surfaces are assigned to the at least one machine parameter on the at least two universal terminals (8), via which the at least one machine parameter can be changed from both, i.e, the first and the second, universal terminals (8).

2. Method according to claim 1, **characterized in that** a configuration of the input interfaces on the at least two universal terminals (8) is carried out by means of a configuration assistant (36) executed on the at least one job computer (4), which is started when an unknown universal terminal (8) is detected or can be started by a user.

3. Method according to claim 2, **characterized in that** the configuration of the at least two universal terminals (8) is stored on the at least one job computer (4).

4. Method according to claim 3, **characterized in that** a plurality of configurations are stored on the at least one job computer (4), one of which is loaded as a function of the universal terminals (8) connected to the at least one job computer (4) after a system start or after a universal terminal (8) has been replaced.

5. Method according to claim 4, **characterized in that** a password is entered to call up a configuration.

6. Method according to one of the preceding claims, **characterized in that** after influencing a machine parameter via one of the two universal terminals (8), the mapping of the machine parameter on the other of the two universal terminals (8) is adapted.

7. Method according to one of the preceding claims, **characterized in that**, in order to avoid simultaneous changes of a machine parameter at different universal terminals (8), when an input is started on one of the two universal terminals (8), an input is blocked on the other of the two universal terminals (8).

8. Method according to one of the preceding claims, **characterized in that** an alarm message is displayed on at least the two universal terminals (8) when a critical value of a machine parameter is detected.

9. Method according to one of the preceding claims, **characterized in that** the at least one job computer (4) communicates with the at least two universal terminals (8) by means of a single address, preferably in the form of an ISOBUS address.

10. Method according to one of claims 1 to 8, **characterized in that** the at least one job computer (4) communicates with the at least two universal terminals (8) by means of more than one address, preferably designed as an ISOBUS address, wherein preferably the number of addresses, in particular designed as ISOBUS addresses, corresponds to the number of at least two universal terminals (8).

11. Method according to one of the preceding claims, **characterized in that** the first universal terminal (8) is controlled by the at least one job computer (4) located in the same housing and communicates with the second universal terminal (8) via a bus connection.

12. Arrangement comprising an agricultural working device (1), which is designed in particular as a working device (1) which is towed or self-propelled by a tractor (2), with a job computer (4) arranged on the working device (1) and comprising at least two universal terminals connected via an ISOBUS interface of the job computer (4), wherein the working device (1) comprises a network, which network is designed as an ISOBUS network and has at least the job computer (4), the connection to the at least two universal terminals (8) and the at least two universal terminals (8), **characterized in that** the at least two universal terminals are designed with equal rights in such a way that they are also interchangeable with one another as desired with regard to their bus addresses, and **in that** the arrangement is designed to carry out a method according to one of the preceding claims.

13. Arrangement according to claim 12, **characterized in that** the job computer (4) and the at least two universal terminals (8) are each provided with their own housings.

14. Arrangement according to claim 12, **characterized in that** the job computer (4) and one of the at least two universal terminals (8) are arranged in a common housing (40) and a second of the at least two universal terminals (8) is arranged remotely therefrom.

## Revendications

1. Procédé pour faire fonctionner un outil (1) de travail agricole, qui est conçu en particulier sous la forme d'un outil de travail (1) tracté par un tracteur (2) ou automoteur, un ou plusieurs paramètres de machine pertinents pour le fonctionnement étant gérés par au moins un ordinateur de travail (4) agencé sur l'outil de travail (1) et étant représentés au moyen d'une interface ISOBUS (34) sur un premier terminal universel parmi au moins deux terminaux universels (8), l'outil de travail (1) comprenant un réseau, lequel réseau est conçu sous la forme d'un réseau ISOBUS et présente au moins ledit au moins un ordinateur de travail (4), la connexion vers lesdits au moins deux terminaux universels (8) et lesdits au moins deux terminaux universels (8), **caractérisé en ce que**, après une éventuelle phase de configuration initiale (9), en fonctionnement, ledit au moins un paramètre de machine est représenté simultanément sur un deuxième desdits au moins deux terminaux universels (8) et lesdits au moins deux terminaux universels sont identiques de telle sorte qu'ils soient également interchangeables les uns par rapport aux autres selon les besoins, en ce qui concerne leurs adresses de bus, des surfaces d'entrée étant associées audit au moins un paramètre de machine sur lesdits au moins deux terminaux universels (8), par l'intermédiaire desquels ledit au moins un paramètre de machine peut être modifié à partir des deux, c'est-à-dire du premier et du deuxième, terminaux universels (8).

2. Procédé selon la revendication 1, **caractérisé en ce qu'**une configuration des interfaces de saisie sur lesdits au moins deux terminaux universels (8) est effectuée au moyen d'un assistant de configuration (36) exécuté sur ledit au moins un ordinateur de travail (4), qui est lancé lors d'une détection d'un terminal universel (8) inconnu ou qui peut être lancé par un utilisateur.

3. Procédé selon la revendication 2, **caractérisé en ce que** la configuration desdits au moins deux terminaux universels (8) est mémorisée sur ledit au moins un ordinateur de travail (4).

4. Procédé selon la revendication 3, **caractérisé en ce qu'**une pluralité de configurations sont mémorisées sur ledit au moins un ordinateur de travail (4), l'une d'entre elles étant chargée en fonction des terminaux universels (8) reliés audit au moins un ordinateur de travail (4) après un démarrage du système ou après un remplacement d'un terminal universel (8).

5. Procédé selon la revendication 4, **caractérisé en ce qu'**une saisie de mot de passe est effectuée pour appeler une configuration.

6. Procédé selon l'une des revendications précédentes, **caractérisé en ce qu'**après avoir influencé un paramètre de la machine via l'un des deux terminaux universels (8), la représentation du paramètre de la machine est adaptée sur l'autre des deux terminaux universels (8).

7. Procédé selon l'une des revendications précédentes, **caractérisé en ce que**, pour éviter des modifications simultanées d'un paramètre de machine sur différents terminaux universels (8), au début d'une entrée sur l'un des deux terminaux universels (8), une entrée sur l'autre des deux terminaux universels (8) est bloquée.

8. Procédé selon l'une des revendications précédentes, **caractérisé en ce qu'**un message d'alarme est affiché sur au moins les deux terminaux universels (8) en cas de détection d'une valeur critique d'un paramètre de la machine.

9. Procédé selon l'une des revendications précédentes, **caractérisé en ce que** ledit au moins un ordinateur de travail (4) communique avec lesdits au moins deux terminaux universels (8) au moyen d'une adresse unique, de préférence conçue sous la forme d'une adresse ISOBUS.

10. Procédé selon l'une des revendications 1 à 8, **caractérisé en ce que** ledit au moins un ordinateur de travail (4) communique avec lesdits au moins deux terminaux universels (8) au moyen de plus d'une adresse conçue de préférence sous forme d'une adresse ISOBUS, le nombre des adresses conçues en particulier comme des adresses ISOBUS correspondant de préférence au nombre desdits au moins deux terminaux universels (8).

11. Procédé selon l'une des revendications précédentes, **caractérisé en ce que** le premier terminal universel (8) est commandé par ledit au moins un ordinateur de travail (4) se trouvant dans le même boîtier et communique par bus avec le deuxième terminal universel (8).

12. Agencement comprenant un outil (1) de travail agricole, qui est conçu en particulier sous la forme d'un outil de travail (1) tracté par un tracteur (2) ou automoteur, comprenant un ordinateur de travail (4) agencé sur l'outil de travail (1) et comprenant au moins deux terminaux universels reliés par une interface ISOBUS de l'ordinateur de travail (4), l'outil de travail (1) comprenant un réseau, lequel réseau est conçu sous la forme d'un réseau ISOBUS et présentant au moins l'ordinateur de travail (4), la connexion avec lesdits au moins deux terminaux universels (8) et lesdits au moins deux terminaux universels (8), **caractérisé en ce que** lesdits au moins deux terminaux universels sont réalisés de façon identique de telle sorte qu'ils sont également interchangeables à volonté les uns par rapport aux autres en ce qui concerne leurs adresses de bus, et **en ce que** l'agencement est réalisé pour la mise en œuvre d'un procédé selon l'une des revendications précédentes.

13. Agencement selon la revendication 12, **caractérisé en ce que** l'ordinateur de travail (4) et lesdits au moins deux terminaux universels (8) sont pourvus chacun de leurs propres boîtiers.

14. Agencement selon la revendication 12, **caractérisé en ce que** l'ordinateur de travail (4) et l'un desdits au moins deux terminaux universels (8) sont agencés dans un boîtier commun (40) et un deuxième desdits au moins deux terminaux universels (8) est agencé à distance de celui-ci.
